# EUROPEAN PATENT APPLICATION

(11) **EP 1 466 523 A2**
(43) Date of publication of application: **13.10.2004**
(21) Application number: 04076131.4
(22) Date of filing: 09.04.2004
(51) Int. Cl.: A01K 61/00

(54) **Method and installation for harvesting shellfish**

(30) Priority: 11.04.2003 NL 1023156
(71) Applicant: Prins & Dingemanse B.V., 4401 NT Yerseke (NL)
(72) Inventor: Prins, Jacobus, 4401 NH Yerseke (NL); Schout, Pieter, 4401 NH Yerseke (NL)
(74) Representative: van Westenbrugge, Andries

(57) **Abstract**

A method for harvesting shellfish that have grown on an essentially vertical substrate (2) suspended in a body of water, comprises the following steps:
- provision of a vessel (5) provided with harvesting means (7 - 9),
- placing the harvesting means (7 - 9) on both sides of the substrate (2),
- making the harvesting means (7 - 9) move over the substrate (2) in a downward movement such that the shellfish are detached therefrom,
- collecting the detached shellfish,
- gathering of the collected shellfish by the vessel (5).

## Description

The invention relates to the harvesting of shellfish, such as mussels, that have grown on a substrate that is suspended vertically in the water. A net is found to be extremely suitable as a substrate to which, for example, shellfish larvae can adhere in certain periods. Such larvae float in the water and usually settle on the bed, where they then grow into adult shellfish. However, the shellfish larvae are fairly vulnerable on the bed. Furthermore, not every bed is suitable for shellfish.

It is known from WO-A 01/93671 to use a net suspended vertically in the water as substrate for the seed mussels. The shellfish larvae can adhere to said net; the animals that have grown on the net are harvested with the aid of a harvesting device that comprises two rollers with a vertically oriented axis. The net is enclosed between said rollers, which are moved in the longitudinal direction over the net while already rotating about their axis. During this operation the shellfish should become detached from the net; they are then collected below the net.

In practice such a procedure is found to be associated with disadvantages. For instance, there is the risk that the net bunches up in the transverse direction under the influence of the tensile forces exerted thereon in the longitudinal direction. As a result the shellfish cannot be harvested well.

The aim of the invention is, therefore, to provide a method for harvesting shellfish which does not have these disadvantages. Said aim is achieved by a method for harvesting shellfish that have grown on an essentially vertical substrate suspended in a body of water, comprising the following steps:
- provision of a vessel provided with harvesting means,
- placing the harvesting means on both sides of the substrate,
- making the harvesting means move over the substrate in a downward movement such that the shellfish are detached therefrom,
- collecting the detached shellfish,
- gathering of the collected shellfish by the vessel.

With the method according to the invention the shellfish can grow on a net suspended in the water. However, when harvesting a sweeping movement in a downward direction over the net is executed, under the influence of which the shellfish become detached from the net and can be collected. The sweeping movement holds the net taut in the transverse direction thereof. As a result, all shellfish over the entire height of the net can be reached easily by the harvesting installation. Furthermore, there is no risk of the net bunching up transversely to the sweeping direction. This is because the direction transverse to the sweeping direction is coincident with the longitudinal direction of the net, such that adequate resistance to bunching up in that direction can be provided. The shellfish harvested can be, for example, mussels, which may or may not then be spread out on mussel beds for further growth.

Furthermore, the harvesting means are moved in the longitudinal direction of the substrate while carrying out the downward movement of said harvesting means, such that the entire net can be treated. In particular, two endless harvesting members in the form of a belt can be used that are each on opposite sides of the substrate. With this arrangement the parts of said members facing the substrate are moved downwards over said sides of the substrate.

With the method according to the invention, good results can be obtained in particular if parts located on either side of said substrate are positioned at an angle such that, in a horizontal plane, the parts define a V-shape, the point of which is oriented away from the direction of movement of said parts in the longitudinal direction of the substrate. The substrate and the shellfish located thereon can then be reliably caught in the pinch between the harvesting members in the form of a belt.

The invention also relates to an installation for carrying out the method as described above, comprising a vessel, propulsion means for moving the vessel in the longitudinal direction along the substrate, and harvesting means that are supported on the vessel for harvesting shellfish that have grown on a substrate suspended essentially vertically in a body of water, which harvesting means can be placed on both sides of the substrate.

Such an installation is disclosed in the abovementioned publication WO-A 01/93671. According to the invention the harvesting means can move downwards over the substrate. The harvesting means can have rotary elements, the axis of which is at an angle or essentially horizontal, as well as at least one flexible or jointed harvesting member that is guided over two rotary elements. The part of said member that faces the substrate can move downwards.

Preferably, two such harvesting members are provided. The substrate can be placed between the parts of these harvesting members that are facing one another. In the horizontal plane, these parts facing one another can define a V shape, the point of which is oriented away from the direction of movement of said parts in the longitudinal direction of the substrate. Such an arrangement provides good guiding over the net of the harvesting installation. In this context it is also advantageous if the rotary elements over which each harvesting member is guided are oriented at an angle, such that the upper rotary element is further forward than the lower rotary element, viewed in the direction in which the harvesting means can be moved along the substrate.

The harvesting means can be supported on the vessel in a wide variety of different ways. In particular, the harvesting means can be on a frame fixed to the vessel. Said frame can be tiltable between an essentially vertical position and an essentially horizontal position. In the horizontal position the harvesting means lie across the vessel, suitable for transport. The harvesting means can be movable along the frame between a raised position above the surface of the water and a lowered position below the surface of the water. Furthermore, they can be moved towards one another and away from one another between an operating position and an open position, respectively, for placing and/or removing the harvesting members relative to the substrate.

The frame preferably has guide members for guiding the harvesting means in the longitudinal direction along the substrate. By means of such guide members, the harvesting means can then always be held in the correct position with respect to the net.

The invention furthermore relates to a system for harvesting shellfish, comprising the installation described above as well as a substrate for making shellfish, such as seed mussels, grow. This system also comprises float members from which the substrate can be suspended essentially vertically in a body of water, as well as guide means on the installation that can be brought into interaction with the float members. Preferably, the float members are tubular; in particular, the float members can comprise tubes that are coupled at their longitudinal ends. The guide means then have a contour that corresponds to the peripheral shape of the guide members.

The invention will now be described in more detail with reference to an illustrative embodiment shown in the figures.
Figure 1 shows a side view of the system according to the invention with the installation and the net provided with float members.
Figure 2 shows a rear view of said system.
Figure 3 shows a plan view of said system.
Figure 4 shows a rear view of the vessel with the installation according to the invention in the raised position.
Figure 5 shows the vessel with the installation according to the invention in the transport position.
Figure 6 shows a detail of the float body used in the system, in longitudinal section.
Figure 7 shows the section according to VII-VII of said float body in cross-section.

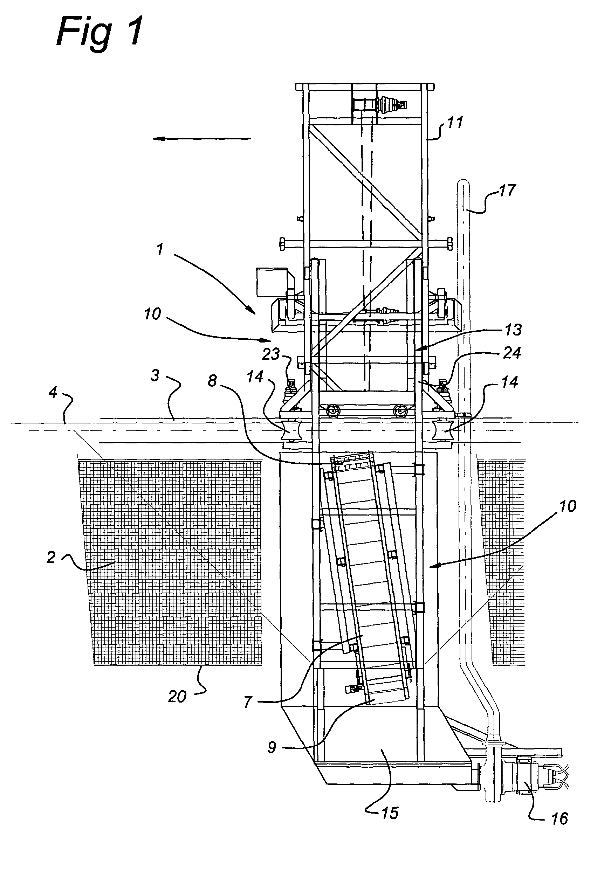

The system shown in Figures 1 - 3 for harvesting shellfish comprises an installation indicated in its entirety by 1, a net 2 and a float body 3 from which the net is suspended in a body of water. The level of said body of water is indicated diagrammatically by reference numeral 4.

The installation 1 is installed on a vessel 5 that floats in the body of water and that is provided with propulsion means 6 for moving the installation 1 along the net 2 and the float body 3, in the longitudinal direction thereof.

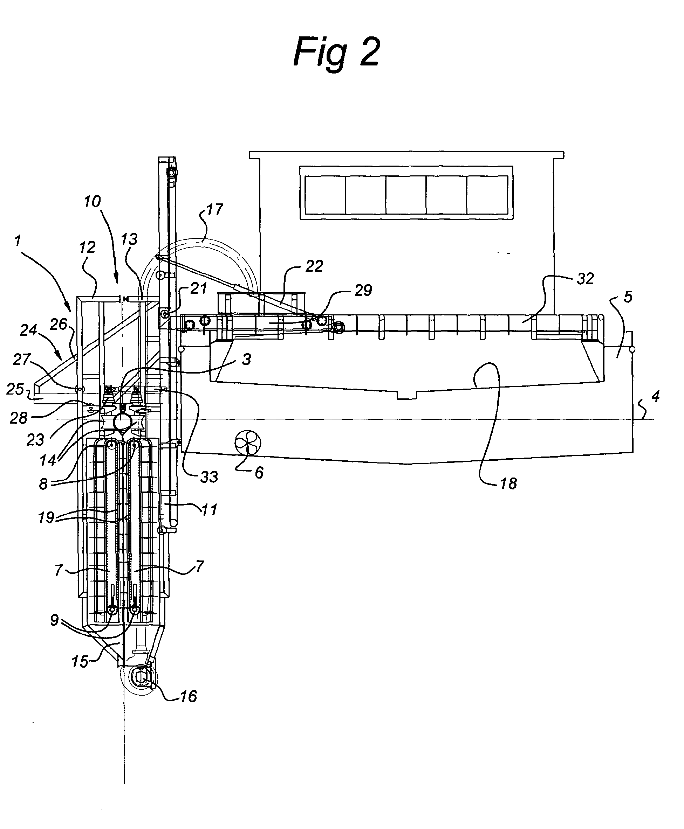

The installation 1 comprises two endless belts 7, which are each guided over two rotary elements 8, 9. These rotary elements are mounted on the framework indicated in its entirety by 10, which, in turn, can be moved up and down over the frame 11. The framework 10 consists of the two framework halves 12, 13, which are located opposite one another. As shown in Figure 2, the framework 13 has a boom indicated in its entirety by 24, which has two beams 25 as well as two struts 26 running upwards at an angle. The beams 25 and struts 26 are fixed to the frame 11 at one end. The framework half 12 has upper rollers 27 and lower rollers 28 which roll, respectively, over the top and the bottom of the associated beams 25.

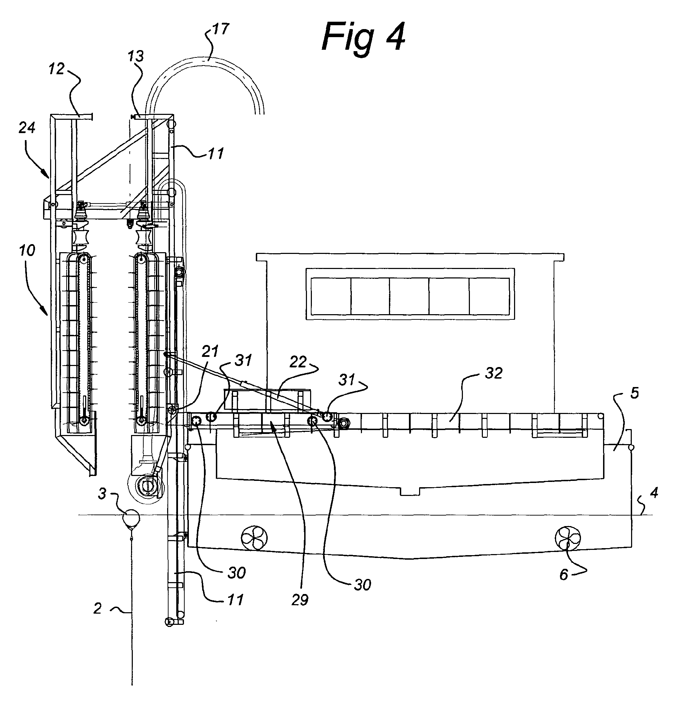

Furthermore, the framework half 12 is connected to the other framework half 13 by means of the hydraulic piston/cylinder device 28. By operating the hydraulic piston/cylinder device 28, the framework half 12 can be pushed away from the other framework half 13 (see Figure 4), such that a larger gap is formed for placing or removing the installation 1 relative to the net 2 and the float body 3.

Furthermore, in each case a pair of guide rollers 14, which have a diabolo shape, are mounted on each of the framework halves 12, 13. These guide rollers 14 can be driven by motors 23. The desired movement along the net 2 can be achieved by this means.

A collection member 15 for harvested shellfish is fitted at the bottom of the framework 10, from which collection member the shellfish can be transferred to the hold 18 of the ship by means of pump 16 and line 17.

The diabolo shape of the pairs of rollers 14 is matched to the shape of the float body 3. In the position shown in Figure 2 the pairs of rollers have been brought into contact with the float body 3 by moving the framework halves 12, 13 towards one another. The guide rollers 14 ensure that the endless belts 7 remain positioned correctly with respect to the net 2 when the vessel 5 moves along this.

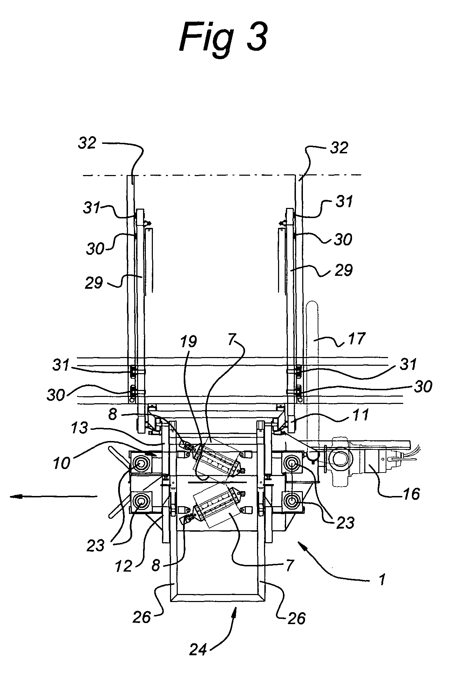

When the framework halves 12, 13 are moved towards one another the parts 19 of the belts 7 facing one another come close to or in contact with the net 2. Because the belts 7 have brushes, they can be held against the net 2 under some pretension. As is shown in Figure 3, the axes of the rotary elements 8 can be oriented at an angle in a V shape with respect to one another, the point of the imaginary V pointing away from the direction of transport as shown by an arrow in Figures 1 and 3. This means that not all the surface of the parts 19 of the belts 7 facing one another comes into contact with the net 2. Such an arrangement is, however, beneficial for gradually feeding said net 2 with shellfish adhering thereto between the conveyor belts 7.

During harvesting, the parts 19 of the belts 7 facing one another are moved downwards, such that the shellfish adhering to the net 2 are detached in a downward direction and they can be collected in the collection device 15. As shown in the view in Figure 1, with this arrangement the rotary elements 8, 9 can be positioned at somewhat of an angle with respect to the horizontal. As a result the upper rotary element 8 is further forward, in the direction of movement along the net 2, than the lower rotary element 9. This arrangement also promotes detachment of the shellfish from the net 2 in an orderly manner.

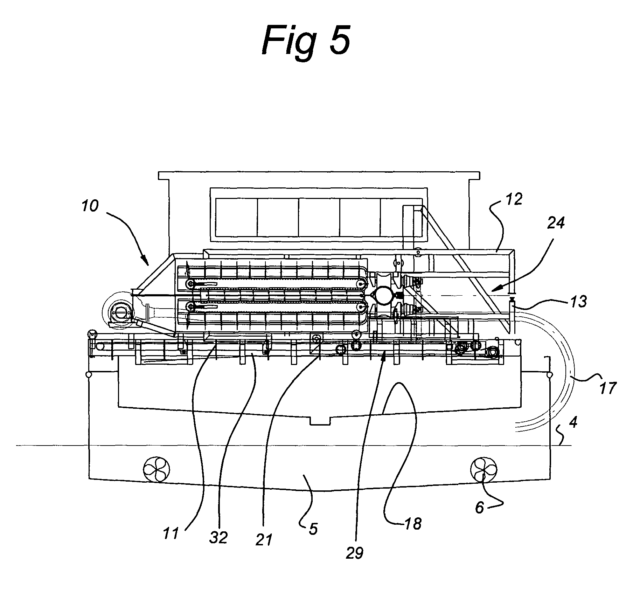

When the parts 19 of the belts 7 facing one another move downwards, the net 2 is stretched to some extent in the direction of the bottom edge 20 thereof, which yields a beneficial effect. In any event the net cannot be entirely bunched up transversely to the sweeping direction exerted by the parts 19, since the large longitudinal dimension of the net 2 prevents this. As shown in Figures 4 and 5, the frame 11 on which the framework 10 is mounted can be tilted between a vertical position as shown in Figure 4 and a horizontal position as shown in Figure 5. For this purpose the frame 11 can be tilted about the pivot pin 21. This tilting movement can be effected by means of the hydraulic cylinder/piston device 22.

The pivot pin 21 and the hydraulic piston/cylinder device 22 are both fixed to a trolley 29 that is supported by means of upper and lower rollers 31, 30 relative to the beams 32 on the vessel 5. From the position shown in Figure 4, the frame 11 can be turned through 90° parallel to the beams 32. The trolley 29 can then be wheeled with respect to the beams 32, such that the position shown in Figure 5 is reached.

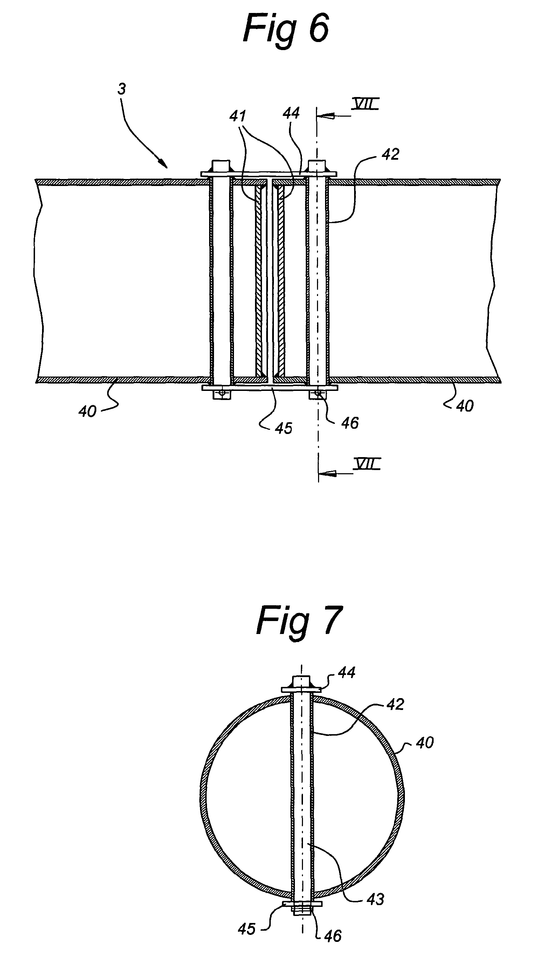

A possible embodiment of the float body 3 is shown in Figures 6 and 7. According to this embodiment the float body 3 consists of tubes 40 that are coupled to one another and are each closed off at the end faces by blanking plates 41. A sleeve 42 has been inserted radially through the outside wall close to each end face of the tubes 40. Both the sleeves 42 and the blanking plates 41 are closed off in a watertight manner with respect to the tubes 40.

A pin 43 is inserted through each sleeve 42. The pairs of pins 43 of the opposing end faces of the tubes 40 are fixed to one another on one side by a plate 44 welded thereto. On the opposite side of the pins 43 a plate 45 that is secured by the locking pins 46 is pushed on.

## Claims

1. Method for harvesting shellfish that have grown on an essentially vertical substrate (2) suspended in a body of water, comprising the following steps:
- provision of a vessel (5) provided with harvesting means (7 - 9),
- placing the harvesting means (7 - 9) on both sides of the substrate (2),
- making the harvesting means (7 - 9) move over the substrate (2) in a downward movement such that the shellfish are detached therefrom,
- collecting the detached shellfish,
- gathering of the collected shellfish by the vessel (5).

2. Method according to Claim 1, wherein the harvesting means (7 - 9) are moved at an angle or essentially vertically over the substrate (2) towards the bottom edge (20) thereof.

3. Method according to Claim 1 or 2, comprising moving the harvesting means (7 - 9) in the longitudinal direction of the substrate (2) while executing the downward movement of said harvesting means (7 - 9).

4. Method according to one of the preceding claims, comprising provision of two endless members (7 - 9) in the form of a belt that are each on opposite sides of the substrate (2) and making the parts (19) of said members (7 - 9) facing the substrate move downwards over said sides of the substrate (2).

5. Method according to Claim 4, comprising positioning the parts (19) located on either side of said substrate (2) at an angle such that, in a horizontal plane, the parts (19) define a V shape, the point of which is oriented away from the direction of movement of said parts (19) in the longitudinal direction of the substrate (2).

6. Installation for carrying out the method according to one of the preceding claims, comprising a vessel (5), propulsion means (6) for moving the vessel (5) in the longitudinal direction along the substrate (2), and harvesting means (7 - 9) that are supported on the vessel (5) for harvesting shellfish that have grown on a substrate (2) suspended essentially vertically in a body of water, which harvesting means (7 - 9) can be placed on both sides of the substrate (2), **characterised in that** the harvesting means (7 - 9) are constructed to provide a downward movement over the substrate.

7. Installation according to Claim 6, wherein the harvesting means have rotary elements (8, 9), the axis of which is at an angle or essentially horizontal.

8. Installation according to Claim 6 or 7, wherein the harvesting means (7 - 9) have at least one endless flexible or jointed harvesting member (7) that is guided over two rotary elements (8, 9) and the part (19) of said harvesting member (7) facing the substrate (2) can move downwards.

9. Installation according to Claim 8, wherein two harvesting members (7) are provided, it being possible for the substrate (2) to be placed between those parts (19) of which harvesting members (7) that are facing one another.

10. Installation according to Claim 9, wherein the parts (19) of the harvesting members (7) facing one another define, in a horizontal plane, a V shape, the point of which is oriented away from the direction of movement of said parts (19) in the longitudinal direction of the substrate (2).

11. Installation according to Claim 9 or 10, wherein the rotary elements (8, 9) over which each harvesting member is guided are oriented at an angle, such that the upper rotary element (8) is further forward than the lower rotary element (9), viewed in the direction in which the harvesting means (7) can be moved along the substrate (2).

12. Installation according to one of Claims 6-11, wherein the harvesting means (7) are on a frame (10) fixed to the vessel (5).

13. Installation according to Claim 12, wherein the frame (10) can be tilted between an essentially vertical position and an essentially horizontal position.

14. Installation according to Claim 12 or 13, wherein the harvesting means (7) can be moved along the frame (10).

15. Installation according to one of Claims 9-14, wherein the harvesting members (7) can be moved towards one another and away from one another between an operating position and an open position, respectively, for placing and/or removing the harvesting members (7) relative to the substrate (2).

16. Installation according to one of Claims 9 - 15, wherein guide members (14) are provided for guiding the harvesting means (7) in the longitudinal direction along the substrate (2).

17. Installation according to Claim 16, wherein the guide means comprise rollers (14).

18. System for harvesting shellfish, comprising an installation (1) according to one of Claims 9 - 17, a float body (3) and a substrate (2) suspended from said float body (3) for making shellfish grow.

19. System according to Claim 18, wherein the installation (1) has guide means (14) that can be brought into interaction with the float body (3).

20. System according to Claim 18, wherein the float body (3) is tubular.

21. System according to Claim 20, wherein the float body comprises tubes (40) that are closed off at longitudinal ends and are coupled two by two.

22. System according to Claim 21, wherein each tube (40) has a blanking plate (41) at the end faces.

23. System according to Claim 21 or 22, wherein each tube has a pin (43) passing radially through it at the end faces and each pair of pins (43) at adjacent end faces of two tubes are connected by couplings (44, 45).

24. System according to Claim 23, wherein each tube has a radial passage (42) at the end faces, in each of which passages a pin (43) is accommodated.

25. System according to one of Claims 21 - 24, wherein the guide means (14) have a contour that corresponds to the peripheral shape of the guide members (3).
